# EUROPÄISCHE PATENTANMELDUNG

(11) **EP 1 103 934 A2**
(43) Veröffentlichungstag der Anmeldung: **30.05.2001**
(21) Anmeldenummer: 00124910.1
(22) Anmeldetag: 15.11.2000
(51) Int. Cl.: G07F 19/00

(54) **Anordnung sowie Dateneingabe-und-übertragungsverfahren zur Abwicklung eines Zahlungsvorganges in einem Datennetz**

(30) Priorität: 24.11.1999 DE 19956500
(71) Anmelder: SIEMENS AKTIENGESELLSCHAFT, 80333 München (DE)
(72) Erfinder: Offer, Gero, 82205 Gilching (DE)

(57) **Zusammenfassung**

Anordnung (1) zur Abwicklung eines Zahlungsvorganges in einem Datennetz (7), welche umfaßt: ein erstes Endgerät (3) eines ersten Nutzers, ein zweites Endgerät (5) eines zweiten Nutzers, einen Dienst-Server (9), über den das erste Endgerät Zugang zu dem IP-Netz hat und eine Netzverbindung (7) zwischen dem ersten und zweiten Endgerät über den Dienst-Server, wobei der Dienst-Server (9) einen Kontodatenspeicher (17) zur Speicherung mindestens eines Satzes von Konto- bzw. Zahlungswegdaten (AD) und/oder eines elektronischen Guthabens des ersten Nutzers aufweist.

## Beschreibung

Die Erfindung betrifft eine Anordnung zur Abwicklung eines Zahlungsvorganges in einem Datennetz nach dem Oberbegriff des Anspruchs 1 sowie ein Dateneingabe- und -übertragungsverfahren nach dem Oberbegriff des Anspruchs 11.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet erfordert die jeweils gesonderte Eingabe der relevanten Datensätze zumindest bei jedem Geschäftspartner, wenn nicht sogar für die einzelne Transaktion, und gibt damit dem Geschäftspartner Einblick in sensible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten die elektronische Abwicklung der Kontoführung und von Zahlungsvorgängen ("Electronic Banking") an.

Gleichwohl erfolgt die Mehrzahl der Zahlungsvorgänge des täglichen Lebens auch heute noch per Bargeld oder durch schriftliche Erteilung von Überweisungs- oder Einzugsaufträgen o. ä. oder bei Kredit- bzw. Scheckkarte. Auf speziellen Gebieten, etwa dem der Mobilfunktechnik, haben auch elektronische Guthaben (sog. "Prepaid-Karten") eine gewisse Bedeutung erlangt, einer breiten Einführung dieses Zahlungsmittels stehen aber erhebliche Hindernisse im Wege.

Insgesamt ist festzustellen, daß beim derzeitigen Stand der Entwicklung eine höchst unübersichtliche Vielzahl von Möglichkeiten der Bezahlung von Waren oder Dienstleistungen besteht, deren Handhabung im täglichen Leben erhebliche Aufmerksamkeit und den Umgang mit den verschiedensten Medien bzw. Eingabemodi erfordert. Das ist lästig und zudem mit vielfältigen Sicherheitsrisiken (Verlust von Daten- bzw. Guthabenträgern, Vergessen von Kontendaten bzw. Authentikationscodes etc.) verbunden.

Der Erfindung liegt daher die Aufgabe zugrunde, eine Anordnung und ein Verfahren zur vereinfachten Abwicklung von Zahlungsverkehr unter Nutzung eines Datennetzes anzugeben.

Diese Aufgabe wird hinsichtlich ihres Vorrichtungsaspektes gelöst durch eine Anordnung mit den Merkmalen des Anspruchs 1 und hinsichtlich ihres Verfahrensaspektes durch ein Verfahren mit den Merkmalen des Anspruchs 11.

Die Erfindung schließt den wesentlichen Gedanken der Bereitstellung einer personengebundenen elektronischen Geldbörse ("Personal e-Wallet") in einem Datennetz, speziell IP-Netz, ein. Dieser Gedanke eröffnet die Möglichkeit einer zunehmenden Verlagerung persönlicher wie auch geschäftlicher Zahlungsvorgänge in das Internet, mit dem Effekt, daß Zahlungen unterschiedlichster Art auf im wesentlichen einheitliche Weise und somit einfacher und sicherer getätigt werden können.

Weiterhin schließt die Erfindung den Gedanken ein, die besagte elektronische Geldbörse auf dem Server des Dienstbetreibers (Providers) einzurichten, über den der Nutzer Zugang zum IP-Netz (Internet) hat. Da sämtliche im Netz ablaufenden Aktivitäten des Nutzers über diesen Server laufen, stellt er die geeignete zentrale Stelle für die Verwaltung der Zahlungsverkehrsdaten des Nutzers dar.

Gemäß einem ersten vorteilhaften Aspekt der Erfindung werden im Rahmen der Bezahlung einer Ware oder Dienstleistung (oder eines sonstigen Zahlungsvorganges) aufgrund eines auslösenden Signals Konto- bzw. Zahlungswegdaten des Beziehers der Ware oder Dienstleistung (oder anderweitig Zahlungspflichtigen) von dem ihm zugeordneten Dienst-Server an den Zahlungsempfänger übermittelt. Dieser handhabt die Daten in üblicher Wiese zur Prüfung der Bonität bzw. zur Übertragung des Zahlungsbetrages auf ein eigenes Konto bzw. Guthaben. Bei einer Anordnung gemäß diesem Aspekt trägt der Betreiber des Dienst-Servers kein Invoice-Risiko, da er lediglich die Plattform für die Zahlungsvorgänge bereitstellt und im Rahmen des Verfahrensablaufes eine Datenübertragung vornimmt.

Gemäß einem weiteren Aspekt der Erfindung besteht beim Provider ein zwischengeschaltetes Zahlungsverkehrskonto bzw. Guthaben, und an den Zahlungsempfänger werden dessen relevante Daten bzw. Guthabenbeträge von hier übertragen. Die Belastung des eigentlichen Zahlungspflichtigen erfolgt im Innenverhältnis zwischen diesem und seinem Provider, wobei der letztere grundsätzlich sowohl in Vorlage gehen als auch vor Übergabe der zahlungsauslösenden Daten an den Zahlungsempfänger den internen Ausgleich herbeiführen kann. Ein Vorteil beider Lösungen ist, daß grundsätzlich keine sensiblen persönlichen Daten des Zahlungspflichtigen an den Zahlungsempfänger übermittelt werden, also grundsätzlich die Wahrung der (zumindest finanztechnischen) Anonymität des Zahlungspflichtigen möglich sein sollte.

In einer bevorzugten Ausführung, die in besonderer Weise zur Vereinfachung des Zahlungsverkehrs beiträgt, sind in mehreren Speicherbereichen des Kontodatenspeichers die Datensätze verschiedener Bank- bzw. Kreditkartenkonten oder sonstiger Guthaben bzw. Zahlungswege oder auch Prepaid-Guthaben des Nutzers gespeichert. Das die Zahlung auslösende Signal (das im Normalfall vom Endgerät des Nutzers ausgehen wird) stellt dann ein Auswahlsignal zur Adressierung eines der Speicherbereiche und damit zur Bestimmung eines der möglichen Zahlungswege dar.

Die Erfindung bietet jedoch auch in der einfachsten Ausführung, bei der nur ein Datensatz vorliegt und das Bestimmungssignal im Grunde lediglich ein Bestätigungssignal für die Übermittlung dieses Datensatzes ist, die Möglichkeit einer Erleichterung des Zahlungsverkehrs mit mehreren Zahlungsempfängern.

In einer weiteren vorteilhaften Ausführung ist - entweder beim Dienst-Server oder auch im Endgerät des Nutzers - die Einstellung mindestens eines Schwellwertes und eine darauf basierende Schwellwertdiskriminierung für die einzelnen Zahlungsvorgänge möglich. Hiermit kann beispielsweise automatisch die Zahlung von Kleinstbeträgen aus einem Prepaid-Guthaben des Nutzers statt auf dem Wege einer Banküberweisung oder einer Kreditkartenbelastung gesteuert werden, oder es wird zumindest eine entsprechende Vorauswahl getroffen, die durch den Nutzer lediglich zu bestätigen ist. Bevorzugt ist dabei die Verwendung spezifischer Schwellwerte für verschiedene Konto- bzw. Zahlungswegdatensätze, mit der beispielsweise spezifische Gebührenstrukturen beim Zahlungsverkehr intelligent genutzt werden können.

In einer weiteren vorteilhaften Ausführung sind beim Dienst-Server Mittel zur Abfrage von Guthaben bzw. des Kontostandes für vorbestimmte Zahlungswege des Nutzers im Zusammenhang mit einer Zahlungs-Anforderung vorgesehen. Die abgefragten Kontostands- bzw. Guthabendaten können grundsätzlich einer internen Verarbeitung beim Dienst-Betreiber unterzogen werden, in deren Ergebnis beispielsweise bestimmte Zahlungswege mangels ausreichenden Guthabens a priori ausgeschlossen werden können. Hierbei wäre die Übermittlung einer Information über das Vorauswahlergebnis an den Nutzer sinnvoll und ausreichend. Andererseits können die gewonnenen bzw. empfangenen Daten auch zusammen mit dem Bestimmungs-Anfragesignal an den Nutzer weitergeleitet werden, um diesem - gewissermaßen mit einem Blick auf den Bildschirm - die sinnvolle Auswahl des aktuell zu wählenden Zahlungsweges in Anbetracht der Guthaben-Konstellationen zu ermöglichen. Diese Ausführungen ersparen dem Nutzer zusätzliche umständliche Aktivitäten zur Prüfung seiner Kontostände im Zusammenhang mit der aktuellen Transaktion.

Weiterhin ist in einer zweckmäßigen Ausführungsform vorgesehen, in Zuordnung zu den Konto- bzw. Zahlungswegdaten vorbestimmte Regeln allgemeinerer Art zu speichern und jede Zahlungsanforderung unter Zugriff auf diese Regeln zu bearbeiten. Auf diese Weise kann beispielsweise einem speziellen Zahlungsempfänger oder einer Gruppe von Zahlungsempfängern permanent ein vorbestimmter Zahlungsweg und einem anderen Zahlungsempfänger oder einer anderen Gruppe ein anderer Zahlungsweg zugeordnet werden. Vorteilhaft ist natürlich das Vorsehen von Möglichkeiten zur Änderung der vorgespeicherten Regeln, insbesondere direkt vom Endgerät des Nutzers aus.

Die Erfindung ist grundsätzlich mit beliebigen Endgeräten ausführbar, die gemäß einem IP-Netz-Protokoll konfiguriert sind oder mit einem IP-Netz kommunizieren können, insbesondere natürlich mit PCs, Laptops, Hand held-PCs, WAP-fähigen Mobiltelefonen oder auch Fernsehern mit Internet-Schnittstelleneinrichtungen. Mobiltelefone werden hierbei über entsprechende Gateway-Server, die die Verbindung zwischen dem Mobilfunknetz und dem IP-Netz herstellen, an den Dienst-Server des IP-Netzes angeschlossen sein, bei dem der Kontodatenspeicher und die zugehörigen Verarbeitungsmöglichkeiten implementiert sind.

Die beim Dienst-Server bestehenden Verarbeitungseinrichtungen sind zweckmäßigerweise mit einer Watchdog-Funktionalität ausgestattet, d. h. sie werden erst bei Eingang eines konkreten Zahlungs-Anforderungssignals aktiviert und führen dann die entsprechenden Signal- bzw. Datenübertragungen aus.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1 eine schematische Prinzipdarstellung einer Anordnung gemäß einer ersten Ausführungsform der Erfindung in Form eines Funktions-Blockschaltbildes,
Fig. 2 ein Funktions-Blockschaltbild der für die Ausführung der Erfindung wesentlichen Komponenten eines Dienst-Servers gemäß einer zweiten Ausführungsform der Erfindung und
Fig. 3 ein Funktions-Blockschaltbild der für die Ausführung der Erfindung wesentlichen Komponenten eines Dienst-Servers gemäß einer dritten Ausführungsform der Erfindung.

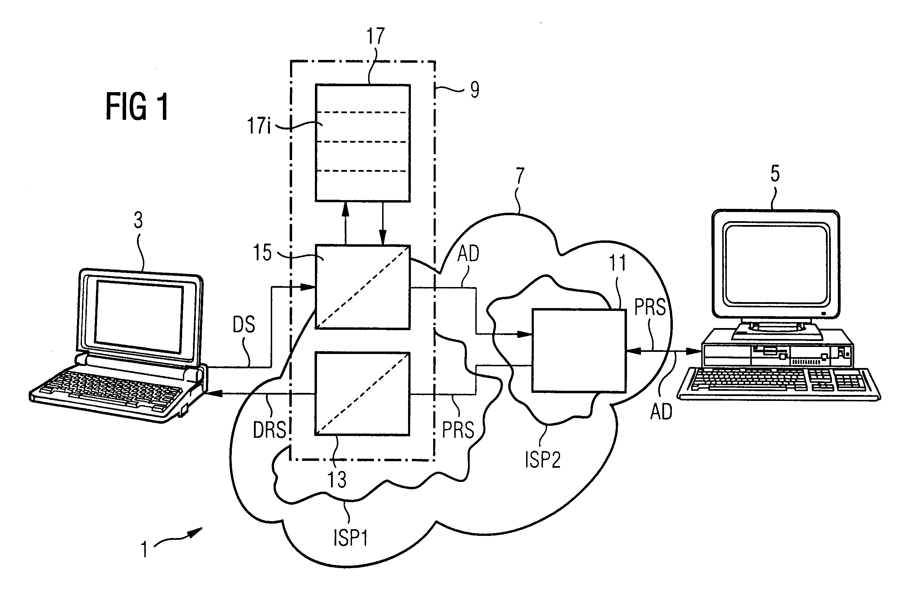

Fig. 1 zeigt schematisch eine Zahlungsabwicklungsanordnung 1 mit einem Laptop 3 eines privaten Nutzers als erstem Endgerät und einem PC 5 eines E-Commerce-Händlers als zweitem Endgerät, die über das Internet 7 miteinander in Verbindung stehen. Der Laptop 3 des privaten Nutzers hat über einen ersten Dienst-Server 9 eines ersten Dienst-Betreiber (Providers) ISP 1 Zugang zum Internet 7 und der PC 5 des Händlers über einen zweiten Dienst-Server 11 eines zweiten Dienst-Betreibers ISP 2.

Der erste Dienst-Server 9 weist als im Zusammenhang mit der Ausführung der Erfindung wesentliche Komponenten eine erste Empfangs-/Sendeeinheit 13 zum Empfang eines vom PC 5 ausgegebenen und über den zweiten Dienst-Server 11 übermittelten Zahlungs-Anforderungssignals PRS und zur Ausgabe eines Bestimmungs-Anforderungssignals DRS an den Laptop 3 auf.

Weiterhin weist der erste Dienst-Server 9 eine zweite Empfangs-/Sendeeinheit zum Empfang eines Bestimmungssignals DS vom Laptop 3 und zur Ausgabe von Kontodaten AD über den zweiten Dienst-Server 11 an den PC 5 des Händlers auf. Die zweite Empfangs-/Sendeeinheit 15 steht in Adress-/Datenverbindung mit einem Kontodatenspeicher 17 mit einer Mehrzahl von Speicherbereichen 17i, den er mit dem Bestimmungssignals DS adressiert und von dem er die in dem adressierten Speicherbereich gespeicherten Kontodaten AD empfängt.

Nachdem der private Nutzer über seinen Laptop 3 und den PC 5 des Händlers eine Bestellung einer Ware oder Dienstleistung bei diesem getätigt hat, gibt dieser das Zahlungs-Anforderungssignal PRS aus, welches die erste und zweite Empfangs/Sendeeinheit 13, 15 des Dienst-Servers 9 "aufweckt" und zur Ausgabe des Bestimmungs-Anforderungssignals DRS an den Laptop 3 veranlaßt. Dort wird in Reaktion auf das Bestimmungs-Anforderungssignal DRS eine Eingabemaske erzeugt, die der private Nutzer zur Eingabe eines der ihm zur Verfügung stehenden Zahlungswege für die angeforderte Zahlung an den Händler nutzt. Die Eingabe des Nutzers generiert ein Bestimmungssignal DS, welches durch die zweite Empfangs-/Sendeeinheit 15 zur Adressierung des ausgewählten Speicherbereiches 17i des Kontodatenspeichers 17 und zum Auslesen der darin gespeicherten Konto- bzw. Zahlungswegdaten AD genutzt wird. Nach dem Auslesen wird dieser Datensatz AD an den PC 5 ausgegeben, wo - nach an sich bekannten Algorithmen, eine Bonitätsprüfung bzw. Abbuchung auf elektronischem Wege ausgeführt werden kann. Der Kontodatenspeicher 17 kann über geeignete (hier nicht dargestellte) Mittel beim ersten Dienst-Server 9 seitens des privaten Nutzers programmiert und umprogrammiert werden. Dies setzt ebenso eine Authentisierung des Nutzers beim Dienst-Server (über an sich bekannte Mechanismen, die nicht zum Gegenstand der Erfindung gehören) voraus, wie jede Verbindungsaufnahme mit dem Dienst-Server zum Zwecke der Durchführung eines Zahlungsvorganges.

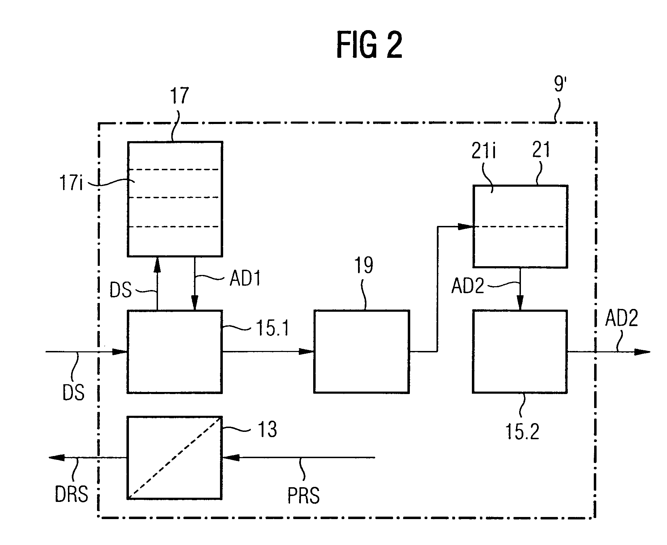

In Fig. 2 ist ein modifizierter erster Dienst-Server 9' skizziert, der die Realisierung eines Zahlungsvorganges in der in Fig. 1 gezeigten Grundkonfiguration ermöglicht, ohne daß Konto- bzw. Zahlungswegdaten des privaten Nutzers zum Händler gelangen. Soweit die hier gezeigten Komponenten mit denen des Dienst-Servers 9 nach Fig. 1 übereinstimmen, sind sie mit denselben Bezugsziffern wie dort bezeichnet. An die Stelle der zweiten Empfangs-/Sendeeinheit tritt hier eine Gruppe von Funktionseinheiten. Diese umfaßt zwei Sende-/Empfangseinheiten 15.1, 15.2, eine interne Verrechnungseinheit 19 und einen Betreiber-Kontodatenspeicher 21, der bei der hier dargestellten Ausführung zwei separat adressierbare Speicherbereiche 21i hat.

Die aufgrund des Bestimmungssignals DS aus dem (Nutzer-)Kontodatenspeicher 17 ausgelesenen Konto- bzw. Zahlungswegdaten, die hier mit AD1 bezeichnet sind, werden von der eingangsseitigen Empfangs-/Sendeeinheit 15.1 zur internen Verrechnungseinheit 19 übertragen, welche (auf wiederum an sich bekannte Weise) eine Abbuchung in Höhe des durch den Händler angeforderten Betrages von dem durch das Bestimmungssignal bezeichneten Konto des Nutzers aufgrund der Kontodaten AD1 auf ein Verrechnungskonto des Betreibers ausführt. Nach Abschluß dieser Transaktion gibt die interne Verrechnungseinheit 19 ein Freigabesignal RS aus, mit dem der Betreiber-Kontodatenspeicher 21 adressiert und ein dort gespeicherter Kontodatensatz AD2 an die ausgangsseitige Empfangs-/Sendeeinheit ausgelesen wird, die diesen schließlich an den PC des Händlers übermittelt.

Bei der Ausführung nach Fig. 2 bleibt finanztechnisch die Anonymität des privaten Nutzers gegenüber dem Händler gewahrt und es wird zugleich gewährleistet, daß der Dienst-Betreiber kein Rechnungs-Risiko eingeht, indem die Freigabe einer Zahlung vom Betreiber-Konto erst nach Gutschrift des Rechnungsbetrages erfolgt.

Je nach Tarifierungsmodell für die Leistung des Dienst-Betreibers im Zusammenhang mit der Ausführung der Erfindung (Bereitstellung des Kontodatenspeichers und der zugehörigen Übertragungs- und Verarbeitungseinrichtungen und - im zuletzt skizzierten Fall - Unterhaltung eines Verrechnungskontos und der für die Transfers erforderlichen Einrichtungen) kann die interne Verrechnung jeweils neben dem Zahlungsbetrag an den Händler noch einen Vergütungsbetrag an den Provider umfassen; es können aber auch Festgebühren für vorbestimmte Zeiträume oder andere Tarifstrukturen realisiert sein.

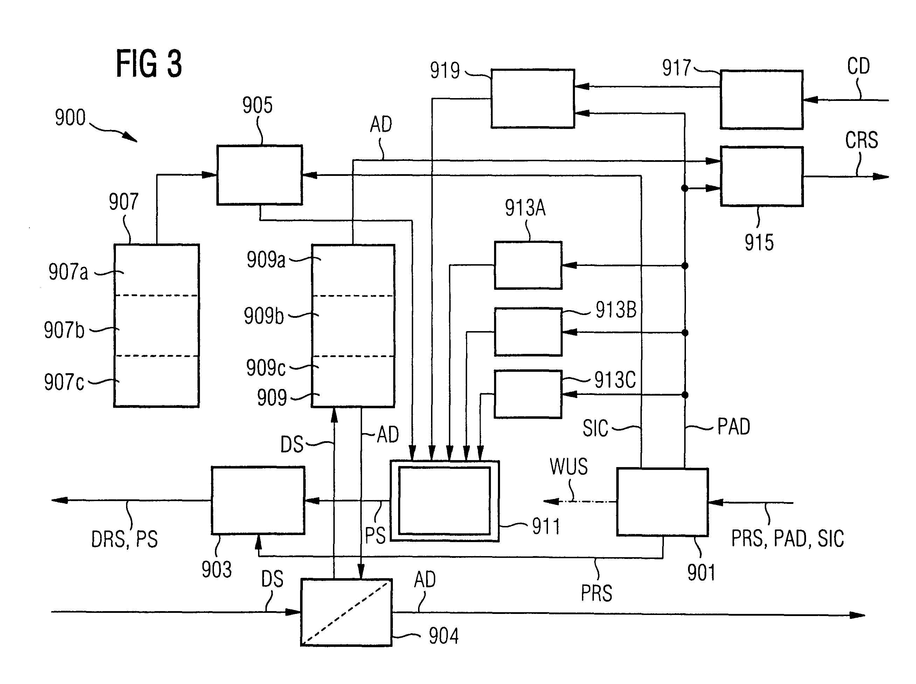

Fig. 3 zeigt im Zusammenhang mit der Ausführung der Erfindung wesentliche Komponenten eines weiteren modifizierten Dienst-Servers 900. Dieser hat bezüglich der Kommunikation zwischen dem Nutzer und dem Händler im Prinzip die gleiche Anordnung und dieselben Funktionen wie bei der Anordnung nach Fig. 1, realisiert aber zusätzliche Verbindungen zu weiteren - in der Figur nicht dargestellten, im Text aber genannten - Nutzern des Netzes. Die mit diesem Dienst-Server 900 aufgebaute Anordnung ist - ebenso wie die Anordnungen nach Fig. 1 und 2 - so konfiguriert, daß der private Nutzer an seinem Endgerät manuell das eine Zahlung auslösende Bestimmungssignal eingibt. Es ist aber darauf hinzuweisen, daß die nachfolgend beschriebenen internen Funktionen des Dienst-Servers auch jeweils separat oder nach einer zusammenfassenden internen Verarbeitung zur automatischen Generierung eines Bestimmungssignals (ohne manuelle Bestätigung durch den Nutzer) genutzt werden können.

Der Dienst-Server 900 weist eine erste Empfangseinheit 901 auf, die zum Empfang eines Datensatzes vom (nicht dargestellten) Händler-Endgerät ausgebildet ist, der aus einem Zahlungs-Anforderungssignal PRS, einem Zahlungsbetragdatensatz PAD und einem Lieferanten-Identifikationscode SIC besteht. Dieser (gegenüber den Ausführungen nach Fig. 1 und 2 wesentlich komplexere) Datensatz wird in der ersten Empfangseinheit 901 aufgespalten, und die Teil-Datensätze bzw. Einzelsignale werden verschiedenen anderen Komponenten zur Weiterverarbeitung zugeführt. Das Zahlungs-Anforderungssignal PRS wird an eine erste Sendeeinheit 903 übermittelt, die daraus ein Bestimmungs-Anforderungssignal DRS bildet und dieses zusammen mit einem Vorauswahlsignal PS, dessen Erzeugung weiter unten beschrieben wird, an ein (nicht gezeigtes) Privatnutzer-Endgerät ausgibt.

Eine zweite Empfangs-/Sendeeinheit 904 empfängt - analog zur Empfangs-/Sendeeinheit 15 nach Fig. 1 - ein vom privaten Nutzer übermitteltes Bestimmungssignal DS, adressiert (einen wieter unten erwähnten) Kontodatenspeicher beim Dienst-Server und gibt einen von dort ausgelesenen Konto- bzw. Zahlungswegdatensatz AD an das Händler-Endgerät aus.

Der Lieferanten-Identifikationscode SIC wird von der ersten Empfangseinheit 901 an eine Regelverarbeitungseinheit 905 übermittelt, die weiterhin in Datenverbindung mit einem Regelspeicher 907 steht. Dieser umfaßt drei Speicherbereiche 907a, 907b und 907c, in denen Zahlungsverkehrsregeln jeweils in Zuordnung zu einem bestimmten Konto oder Zahlungsweg des privaten Nutzers gespeichert sind. Der Aufbau des Regelspeichers 907 folgt dabei dem Aufbau eines Kontodatenspeichers 909, in dessen Speicherbereichen 909a bis 909c die relevanten Konto- bzw. Zahlungswegdaten von drei dem Nutzer verfügbaren Zahlungswegen gespeichert sind, beispielsweise die Daten eines Bank- sowie eines Kreditkartenkontos sowie ein Prepaid-Guthaben. Im dargestellten Beispiel umfassen die gespeicherten Zahlungsverkehrsregeln die Zuordnung jeweils eines bestimmten Zahlungsweges zu einer Gruppe vorbestimmter Geschäftspartner (Händler). Die Regelverarbeitungseinheit 905 stellt also hier im Grunde eine Vergleichereinheit dar, die den empfangenen Lieferanten-Identifikationscode mit einer Menge vorgespeicherter Identifikationscodes vergleicht und den diesem Lieferanten zugeordneten bevorzugten Zahlungsweg ermittelt und ein entsprechendes Ausgangssignal an eine logische Verarbeitungseinheit 911 ausgibt.

Die in der ersten Empfangseinheit 901 abgetrennten Zahlungsbetragdaten PAD werden zum einen drei Schwellwertdiskriminatoren 913A, 913B und 913C zugeführt, die jeweils einem der Speicherbereiche 909a bis 909c des Kontodatenspeichers 909 zugeordnet sind. In den Schwellwertdiskriminatoren 913A bis 913C erfolgt eine Schwellwert-Verarbeitung der Zahlungsbetragdaten PAD anhand vorgespeicherter Schwellwerte, die zur Ausgabe jeweils eines Ausgangssignals an die logische Verarbeitungseinheit 911 führt. Dieses Ausgangssignal gibt an, ob einer der nutzbaren Zahlungswege in Anbetracht des angeforderten Zahlungsbetrages ausgeschlossen oder jedenfalls nicht priorisiert ist.

Die Zahlungsbetragdaten PAD gelangen weiterhin zu einer zweiten Sendeeinheit 915, die bei Empfang eines entsprechenden Datensatzes zudem Konto- bzw. Zahlungswegdaten AD aus dem Kontodatenspeicher 909 abfordert und durch Ausgabe von Guthaben-Anfragesignalen CRS Kontostandsabfragen ausführt. Diese können (in Abhängigkeit von der Organisation des Zahlungsverkehrs des Nutzers) an beim Dienst-Betreiber vorgesehene Zwischenspeichereinrichtungen oder aber über das Internet direkt an die kontoführenden Stellen gerichtet werden. In Reaktion auf das Guthaben-Anfragesignal CRS übermittelte Guthabendaten CD werden über eine dritte Empfangseinheit 917 aufgenommen und - zusammen mit den Zahlungsbetragdaten PAD - einer Vergleichereinheit 919 zugeführt, die im Ergebnis eines Vergleichs der Beträge ein weiteres Eingangssignal für die logische Verarbeitungseinheit 911 ausgibt.

In der logischen Verarbeitungseinheit 911 wird eine Gesamt-Verarbeitung aller empfangenen Signale durchgeführt, die im Ergebnis der Regelverarbeitung, der Schwellwertdiskriminierung des Zahlungsbetrages und der Guthaben-Verarbeitung des Zahlungsbetrages gewonnen wurden. Es wird ein Vorauswahlsignal PS bezüglich des zu wählenden Zahlungsweges generiert, welches der ersten Sendeeinheit 903 zugeführt und durch diese zusammen mit dem Bestimmungs-Anforderungssignal PRS an den privaten Nutzer übermittelt wird. Der zahlungspflichtige Nutzer erhält also vom Dienst-Server im Ergebnis von dessen interner Verarbeitung einen Vorschlag für den zu wählenden Zahlungsweg, den er durch Anklicken lediglich bestätigen muß. Er kann aber (in einer entsprechend ausgebildeten Maske) auch einen anderen Zahlungsweg festlegen, sodaß seine Dispositionsfreiheit erhalten bleibt. Bei der gezeigten Konfiguration sind sowohl der Kontodatenspeicher 909 als auch die Schwellwertdiskriminatoren 913A bis 913C und der Regelspeicher 907 über das Endgerät des privaten Nutzers extern zugreif- und umprogrammierbar. Es ist noch darauf hinzuweisen, daß die erste Empfangseinheit 901 eine Watchdog-Funktionalität realisiert, indem sie bei Empfang des Datensatzes PRS/ PAD/SIC ein Aufwecksignal WUS an die übrigen Sende-, Empfangs- und Verarbeitungseinheiten ausgibt und diese somit aktiviert.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen. Insbesondere können Teile der bei der Anordnung nach Fig. 3 im Dienst-Server realisierten Funktionalität zur Generierung des Vorauswahlsignals PS oder diese Funktionalität insgesamt auch im Endgerät des Nutzers implementiert sein.

## Patentansprüche

1. Anordnung (1) zur Abwicklung eines Zahlungsvorganges in einem Datennetz, insbesondere IP-Netz (7), welche umfaßt:
- ein erstes Endgerät (3) eines ersten Nutzers,
- ein zweites Endgerät (5) eines zweiten Nutzers,
- einen Dienst-Server (9, 9', 900), über den das erste Endgerät Zugang zu dem Datennetz hat, und
- eine Netzverbindung (7) zwischen dem ersten und zweiten Endgerät über den Dienst-Server,
**dadurch gekennzeichnet**, daß
der Dienst-Server (9, 9', 900)
- einen Kontodatenspeicher (17; 21; 909) zur Speicherung mindestens eines Satzes von Konto- bzw. Zahlungswegdaten (AD; AD1) und/oder eines elektronischen Guthabens des ersten Nutzers,
- eine erste Empfangs-/Sendeeinrichtung (13; 901, 903) zum Empfang eines Zahlungs-Anforderungssignals (PRS) vom zweiten Endgerät (5) und zur Ausgabe eines Bestimmungs-Anforderungssignals (DRS) an das erste Endgerät (3) in Reaktion hierauf und
- eine zweite Empfangs-/Sendeeinrichtung (15; 15.1, 15.2; 19; 904) zum Empfang eines Bestimmungssignals (DS) vom ersten Endgerät, zur Adressierung des Kontodatenspeichers und zur Ausgabe eines durch das Bestimmungssignal bestimmten Satzes von Konto- bzw. Zahlungswegdaten (AD; AD1) und/ oder eines Teils eines elektronischen Guthabens des ersten Nutzers oder eines dem Betreiber des Dienst-Servers zugeordneten Satzes von Konto- bzw. Zahlungswegdaten oder eines Teils eines elektronischen Guthabens des Betreibers
aufweist.

2. Anordnung nach Anspruch 1,
**dadurch gekennzeichnet**, daß
der Kontodatenspeicher (17; 909) eine Mehrzahl von separat adressierbaren Speicherbereichen (17i; 909a, 909b, 909c) zur Speicherung mehrerer Sätze von Konto- bzw. Zahlungswegdaten (AD) und/oder eines elektronischen Guthabens des ersten Nutzers aufweist.

3. Anordnung nach Anspruch 1 oder 2,
**dadurch gekennzeichnet**, daß
der Kontodatenspeicher (21) mindestens einen Speicherbereich (21i) zur Speicherung eines dem Betreiber des Dienst-Servers zugeordneten Satzes von Konto- bzw. Zahlungswegdaten (AD2) oder eines elektronischen Guthabens des Betreibers (ISP1) und der Dienst-Server (9') Mittel (19) zur internen Ausführung einer elektronischen Gutschrift auf das Konto oder elektronische Guthaben des Betreibers unter Zugriff auf den mindestens einen Satz von Konto- bzw. Zahlungswegdaten (AD1) und/oder des elektronischen Guthabens des ersten Nutzers aufweist.

4. Anordnung nach einem der vorangehenden Ansprüche,
**dadurch gekennzeichnet**, daß
im ersten Endgerät oder im Dienst-Server (900) mindestens ein, insbesondere über das erste Endgerät einstellbarer, Schwellwertdiskriminator (913A, 913B, 913C) zum Empfang und zur Schwellwertverarbeitung von Zahlungsbetragdaten (PAD) und zur selbsttätigen Ausgabe eines Bestimmungssignals oder eines Vorauswahlsignals (PS) im Ergebnis der Schwellwertverarbeitung vorgesehen ist.

5. Anordnung nach Anspruch 4,
**dadurch gekennzeichnet**, daß
jedem Satz von Konto- bzw. Zahlungswegdaten (AD) und/oder dem elektronischen Guthaben des ersten Nutzers ein Schwellwertdiskriminator (913A, 913B, 913C) zugeordnet ist.

6. Anordnung nach einem der vorangehenden Ansprüche,
**dadurch gekennzeichnet**, daß
der Dienst-Server (900) eine dritte Empfangs-/Sendeeinrichtung (915, 917) zur Ausgabe eines Guthaben-Abfragesignals (CRS) unter Nutzung des Satzes von Konto- bzw. Zahlungswegdaten (AD) des ersten Nutzers im Ansprechen auf das Zahlungs-Anforderungssignal (PRS) sowie zum Empfang und zur Weiterleitung und/oder internen Verarbeitung von Guthabendaten (CD) an das erste Endgerät zusammen mit dem Bestimmungs-Anfragesignal (DRS) aufweist.

7. Anordnung nach Anspruch 6,
**dadurch gekennzeichnet**, daß
im ersten Endgerät oder im Dienst-Server (900) mindestens eine Vergleichereinheit (919) zum Vergleich von Zahlungsbetragsdaten (PAD) mit empfangenen Guthabendaten (CD) zur selbsttätigen Ausgabe eines Bestimmungssignals oder eines Vorauswahlsignals (PS) im Ergebnis des Vergleichs vorgesehen ist.

8. Anordnung nach einem der vorangehenden Ansprüche,
**dadurch gekennzeichnet**, daß
im ersten Endgerät oder im Dienst-Server (900) ein Regelspeicher (907) zur Speicherung von mindestens einer Zahlungsverkehrsregel jeweils in Zuordnung zu einem Satz von Konto- bzw. Zahlungswegdaten (AD) und/oder einem elektronischen Guthaben des ersten Nutzers und
eine Regelverarbeitungseinheit (905) zur Auswertung des Zahlungs-Anforderungssignals oder eines mit diesem empfangenen zusätzlichen Signals (SIC) unter Zugriff auf den Regelspeicher und zur selbsttätigen Ausgabe eines Bestimmungssignals oder eines Vorauswahlsignals (PS) im Ergebnis der Verarbeitung vorgesehen ist.

9. Anordnung nach einem der Ansprüche 4 bis 8,
**gekennzeichnet durch**
Mittel zur Anzeige des selbsttätig erzeugten Bestimmungs- oder Vorauswahlsignals am ersten Endgerät.

10. Anordnung nach einem der vorangehenden Ansprüche,
**dadurch gekennzeichnet**, daß
in der ersten Empfangs-/Sendeeinrichtung (901) eine Watchdog-Funktion (WUS) implementiert ist derart, daß die erste und zweite Empfangs-/Sendeeinrichtung im Ansprechen auf ein Zahlungs-Anforderungssignal (PRS) aktiviert werden.

11. Dateneingabe- und -übertragungsverfahren zur Abwicklung eines Zahlungsvorganges in einem Datennetz, bei dem ein Satz von Konto- bzw. Zahlungswegdaten oder ein elektronisches Guthaben eines ersten Nutzers des Datennetzes an einen zweiten Nutzer übertragen wird,
**dadurch gekennzeichnet**, daß
- in einem Kontodatenspeicher eines Dienst-Servers im IP-Netz mindestens ein Satz von Konto- bzw. Zahlungswegdaten und/oder ein elektronisches Guthaben des ersten Nutzers gespeichert wird,
- von einem Endgerät des zweiten Nutzers ein Zahlungs-Anforderungssignal zur Übertragung von Konto- bzw. Zahlungswegdaten und/oder eines Teils des elektronischen Guthabens des ersten Nutzers an den Dienst-Server ausgegeben wird,
- in Reaktion auf das Zahlungs-Anforderungssignal vom Dienst-Server ein Bestimmungs-Anforderungssignal an ein Endgerät des ersten Nutzers ausgegeben und dort insbesondere angezeigt wird,
- ein eingegebenes Bestimmungssignal zur Bestimmung eines Satzes von Konto- bzw. Zahlungswegdaten und/oder eines Teils eines elektronischen Guthabens des ersten Nutzers vom Endgerät des ersten Nutzers an den Dienst-Server ausgegeben wird und
- in Reaktion auf das Bestimmungssignal vom Dienst-Server der bestimmte Satz von Konto- bzw. Zahlungswegdaten oder der bestimmte Teil des elektronischen Guthabens an das Endgerät des zweiten Nutzers ausgegeben wird.

12. Verfahren nach Anspruch 11,
**dadurch gekennzeichnet**, daß
die Ausgabe des Bestimmungssignals eine Auswahl aus einer Mehrzahl von gespeicherten Sätzen von Konto- bzw. Zahlungswegdaten und/oder elektronischen Guthaben des ersten Nutzers umfaßt.

13. Verfahren nach Anspruch 11 oder 12,
**gekennzeichnet durch**
einen Schritt der Ausführung einer elektronischen Gutschrift auf ein Konto oder elektronisches Guthaben des Betreibers des Dienst-Servers unter Zugriff auf einen Satz von Konto- bzw. Zahlungswegdaten oder ein elektronisches Guthaben des ersten Nutzers.

14. Verfahren nach einem der Ansprüche 11 bis 13,
**gekennzeichnet durch**
einen Schritt einer Schwellwertdiskriminierung von durch das zweite Endgerät ausgegebenen Zahlungsbetragdaten im ersten Endgerät oder im Dienst-Server mit selbsttätiger Ausgabe eines Bestimmungssignals oder eines Vorauswahlsignals.

15. Verfahren nach Anspruch 14,
**dadurch gekennzeichnet**, daß
der Schritt der Schwellwertdiskriminierung mehrere Teilschritte aufgrund verschiedener Schwellwerte umfaßt.

16. Verfahren nach einem der Ansprüche 11 bis 15,
**dadurch gekennzeichnet**, daß
vom Dienst-Server im Ansprechen auf das Zahlungs-Anforderungssignal ein Guthaben-Abfragesignal generiert und in Reaktion auf das Guthaben-Abfragesignal gewonnene oder empfangene Guthabendaten intern verarbeitet und/oder zusammen mit dem Bestimmungs-Abfragesignal an das erste Endgerät weitergeleitet werden.

17. Verfahren nach Anspruch 16,
**gekennzeichnet durch**
einen Schritt des Vergleichs von durch das zweite Endgerät ausgegebenen Zahlungsbetragsdaten mit den Guthabendaten zur selbsttätigen Ausgabe eines Bestimmungssignals oder eines Vorauswahlsignals.

18. Verfahren nach einem der Ansprüche 11 bis 17,
**dadurch gekennzeichnet**, daß
im ersten Endgerät oder im Dienst-Server mindestens eine Zahlungsverkehrsregel jeweils in Zuordnung zu einem Satz von Konto- bzw. Zahlungswegdaten und/oder einem elektronischen Guthaben des ersten Nutzers gespeichert wird und
im Ansprechen auf ein Zahlungs-Anforderungssignal eine Auswertung desselben mit der gespeicherten Zahlungsverkehrsregel zur selbsttätigen Ausgabe eines Bestimmungssignals oder eines Vorauswahlsignals im Ergebnis der Verarbeitung ausgeführt wird.

19. Verfahren nach einem der Ansprüche 14 bis 18,
**dadurch gekennzeichnet**, daß
das selbsttätig erzeugte Bestimmungssignal oder Vorauswahlsignal am ersten Endgerät angezeigt wird.

20. Verfahren nach einem der Ansprüche 11 bis 19,
**dadurch gekennzeichnet**, daß
die erste und zweite Empfangs-/Sendeeinrichtung im Ansprechen auf ein Zahlungs-Anforderungssignal aus einem Sleep-Zustand aktiviert werden.
